# EUROPEAN PATENT APPLICATION

(11) **EP 4 741 193 A1**
(43) Date of publication of application: **13.05.2026**
(21) Application number: 25208219.3
(22) Date of filing: 13.10.2025
(51) Int. Cl.: B60K 1/00, B60K 1/02, F16H 57/04, F16H 63/34

(54) **DRIVE UNIT**

(30) Priority: 06.11.2024 JP 2024194615
(71) Applicant: TOYOTA JIDOSHA KABUSHIKI KAISHA, Toyota-shi, Aichi-ken 471-8571 (JP)
(72) Inventor: SUZUKI, Yusuke, Toyota-shi, 471-8571 (JP); OKUDA, Koichi, Toyota-shi, 471-8571 (JP); ITO, Eiji, Toyota-shi, 471-8571 (JP); SAITO, Naoki, Toyota-shi, 471-8571 (JP)
(74) Representative: D Young & Co LLP

(57) **Abstract**

A drive unit may be configured to drive a pair of wheels independently from each other. A casing of the drive unit may include a first portion disposed on one side of the pair of wheels and a second portion disposed on another side of the pair of wheels when the drive unit is mounted in a vehicle. A first motor, a first reduction drive, a first inverter, and a lock mechanism configured to mechanically lock and unlock the first reduction drive may be disposed in the first portion. The second motor, the second reduction drive, and the second inverter may be disposed in the second portion. A motor central plane located between and equidistant from the first and second motors may be offset closer to the second portion relative to an inverter central plane located between and equidistant from the first and second inverters.

## Description

### TECHNICAL FIELD

The art disclosed herein relates to a drive unit for a vehicle.

### BACKGROUND ART

Japanese Patent Application Publication No. 2017-047698 describes a drive unit for a vehicle. The drive unit includes two motors and two reduction drives, and is configured to drive a pair of right and left wheels independently from each other.

### SUMMARY

In the above-mentioned drive unit, the two motors and the two reduction drives are disposed symmetrically. In the drive unit configured to drive the pair of right and left wheels independently from each other, it is desirable to arrange its constituent features in a pair such as motors and reduction drives in a balanced manner on left and right sides as in the above-mentioned drive unit. However, the constituent features of the drive unit further include features which do not form a pair, such as a lock mechanism. The lock mechanism is also referred to as a parking lock, for example, and is disposed on one of the two reduction drives, and is configured to lock and unlock the one reduction drive. The presence of the lock mechanism creates mass imbalance in the drive unit between the left and right sides. The present teachings provide an art configured to suppress such imbalance.

The techniques disclosed herein are embodied by a drive unit for a vehicle. The drive unit may be configured to drive a pair of left and right wheels independently from each other. The drive unit may comprise: a first motor configured to drive one of the left and right wheels; a first reduction drive configured to reduce rotation of the first motor; a first inverter electrically connected to the first motor; a second motor configured to drive another of the left and right wheels; a second reduction drive configured to reduce rotation of the second motor; a second inverter electrically connected to the second motor; a lock mechanism configured to mechanically lock and unlock the first reduction drive; and a casing housing the first motor, the first reduction drive, the first inverter, the second motor, the second reduction drive, the second inverter, and the lock mechanism, wherein the casing may comprise a first portion and a second portion, in which the first portion may be disposed on one side of the pair of left and right wheels and the second portion may be disposed on another side of the pair of left and right wheels when the drive unit is mounted in the vehicle, the first motor, the first reduction drive, the first inverter, and the lock mechanism may be disposed in the first portion of the casing, the second motor, the second reduction drive, and the second inverter may be disposed in the second portion of the casing, and a motor central plane located between and equidistant from the first motor and the second motor may be offset closer to the second portion of the casing relative to an inverter central plane located between and equidistant from the first inverter and the second inverter.

### BRIEF DESCRIPTION OF DRAWINGS

FIG. 1 illustrates a block diagram showing a vehicle in a top view.
FIG. 2 illustrates a schematic view of a drive unit.
FIG. 3 illustrates a schematic view of the drive unit.
FIG. 4 illustrates a configuration of a lock mechanism.
FIG. 5 illustrates an enlarged view of a section V in FIG. 2.

### DETAILED DESCRIPTION

In a first aspect, a drive unit for a vehicle may be configured to drive a pair of left and right wheels independently from each other. The drive unit may comprise: a first motor configured to drive one of the left and right wheels; a first reduction drive configured to reduce rotation of the first motor; a first inverter electrically connected to the first motor; a second motor configured to drive another of the left and right wheels; a second reduction drive configured to reduce rotation of the second motor; a second inverter electrically connected to the second motor; a lock mechanism configured to mechanically lock and unlock the first reduction drive; and a casing housing the first motor, the first reduction drive, the first inverter, the second motor, the second reduction drive, the second inverter, and the lock mechanism. The casing may comprise a first portion and a second portion. The first portion may be disposed on one side of the pair of left and right wheels and the second portion may be disposed on another side of the pair of left and right wheels when the drive unit is mounted in the vehicle. The first motor, the first reduction drive, the first inverter, and the lock mechanism may be disposed in the first portion of the casing. The second motor, the second reduction drive, and the second inverter may be disposed in the second portion of the casing, and a motor central plane located between and equidistant from the first motor and the second motor may be offset closer to the second portion of the casing relative to an inverter central plane located between and equidistant from the first inverter and the second inverter.

In the above-mentioned drive unit, the first motor, the first reduction drive, the first inverter, and the lock mechanism are disposed in the first portion of the casing (i.e., one side of the pair of left and right wheels), and the second motor, the second reduction drive, and the second inverter are disposed in the second portion of the casing (i.e., the other side of the pair of left and right wheels). That is, the lock mechanism exists only in the first portion of the casing, and there is no configuration corresponding to the lock mechanism in the second portion of the casing. For this reason, in the above-mentioned drive unit, the first motor and the second motor are positioned such that a position of a center of gravity of the first and second motors as a whole is offset closer to the second portion relative to the inverter central plane located between and equidistant from the first motor and the second motor. More specifically, the motor central plane located between and equidistant from the first motor and the second motor is offset closer to the second portion of the casing relative to the inverter central plane located between and equidistant from the first inverter and the second inverter. Due to this, even when the drive unit includes the lock mechanism, mass imbalance between the left and right sides of the drive unit can be suppressed.

In a second aspect, in addition to the first aspect, the casing may comprise a first oil pan provided at a lower part of the first portion and a second oil pan provided at a lower part of the second portion, and an oil pan central plane located between and equidistant from the first oil pan and the second oil pan may be offset closer to the first portion of the casing relative to the motor central plane. According to such configuration, the first oil pan and the second oil pan can be positioned such that the position of center of gravity of the first and second oil pans as a whole is offset toward to the first portion relative to the motor central plane. Due to this, the mass imbalance between the left and right sides of the drive unit can be suppressed.

In a third aspect, in addition to the above-mentioned first or second aspect, the drive unit may be connected to a first drive shaft connected to the one of the left and right wheels and a second drive shaft connected to the other of the left and right wheels. In this case, a center of gravity of the drive unit is located on an inboard central plane located between and equidistant from a first drive shaft inboard side of the first drive shaft and a second drive shaft inboard side of the second drive shaft. According to such configuration, drive shafts of the same length can be used for the first drive shaft and the second drive shaft when the drive unit is mounted in the vehicle such that the center of gravity of the drive unit is located on the vehicle central plane located between and equidistant from the left wheel and the right wheel. This can improve driving performance of the vehicle.

In a fourth aspect, in addition to any of the above-mentioned first to third aspects, the drive unit may further comprise: a first terminal block fixed to the casing; a first conductive path electrically connecting the first inverter and the first motor via the first terminal block; a second terminal block fixed to the casing; and a second conductive path electrically connecting the second inverter and the second motor via the second terminal block. In this case, a total length of the first conductive path and a total length of the second conductive path may be different from each other. On the other hand, a section length of the first conductive path from the first motor to the first terminal block and a section length of the second conductive path from the second motor to the second terminal block may be equal to each other. According to such configuration, the section from the first motor to the first terminal block of the first conductive path and the section from the second motor to the second terminal block of the second conductive path can be standardized in designs. These sections are each near the first motor or the second motor, and thus they need to be relatively rigid and/or durable. If the designs of such sections can be standardized, even when the total length of the first conductive path differs from the total length of the second conductive path, it is easy to satisfy the rigidity and/or durability required for the first conductive path and the second conductive path.

In a fifth aspect, in addition to any of the above-mentioned first to fourth aspects, the first motor and the second motor may be arranged symmetrically with respect to the motor central plane. According to such configuration, mass imbalance in the drive unit between the left and right sides can be effectively suppressed. In another embodiment, however, the first motor and the second motor may not be arranged symmetrically with respect to the motor central plane.

In a sixth aspect, in addition to any of the above-mentioned first to fifth aspects, the first inverter and the second inverter are arranged symmetrically with respect to the inverter central plane. According to such configuration, the mass imbalance in the drive unit between the left and right sides can be effectively suppressed. In another embodiment, however, the first inverter and the second inverter may not be arranged symmetrically with respect to the inverter central plane.

In a seventh aspect, in addition to any of the above-mentioned first to sixth aspects, the casing may comprise: a first motor chamber being located in the first portion and housing the first motor and the first reduction drive; a second motor chamber being located in the second portion and housing the second motor and the second reduction drive; and a motor chamber bulkhead being located on the motor central plane and at least partially separating the first motor chamber and the second motor chamber from each other.

In a eighth aspect, in addition to the above-mentioned seventh aspect, the casing may further comprise: a first inverter chamber being located in the first portion and housing the first inverter, a second inverter chamber being located in the second portion and housing the second inverter, and an inverter chamber bulkhead being located on the inverter central plane and at least partially separating the first inverter chamber and the second inverter chamber from each other.

In a nineth aspect, in addition to any of the above-mentioned first to eighth aspects, the lock mechanism may be provided on a rotary axis connecting the first motor and the first reduction drive. According to such configuration, when the first reduction drive is locked, torque acting on the lock mechanism can be made relatively smaller. In another embodiment, however, the lock mechanism may be arranged on the rotary axis of the one side of the pair of the left and right wheels.

In a tenth aspect, in addition to the above-mentioned nineth aspect, the lock mechanism may comprise: a lock gear fixed to the rotary axis; and a lock pole configured to move between a lock position in which the lock pole is engaged with the lock gear and an unlock position in which the lock pole is disengaged from the lock gear.

Representative, non-limiting examples of the present disclosure will now be described in further detail with reference to the attached drawings. This detailed description is merely intended to teach a person of skill in the art further details for practicing preferred aspects of the present teachings and is not intended to limit the scope of the disclosure. Furthermore, each of the additional features and teachings disclosed below may be utilized separately or in conjunction with other features and teachings to provide improved drive units, as well as methods for using and manufacturing the same.

Moreover, combinations of features and steps disclosed in the following detailed description may not be necessary to practice the disclosure in the broadest sense, and are instead taught merely to particularly describe representative examples of the disclosure. Furthermore, various features of the above-described and below-described representative examples, as well as the various independent and dependent claims, may be combined in ways that are not specifically and explicitly enumerated in order to provide additional useful embodiments of the present teachings.

All features disclosed in the description and/or the claims are intended to be disclosed separately and independently from each other for the purpose of original written disclosure, as well as for the purpose of restricting the claimed subject matter, independent of the compositions of the features in the embodiments and/or the claims. In addition, all value ranges or indications of groups of entities are intended to disclose every possible intermediate value or intermediate entity for the purpose of original written disclosure, as well as for the purpose of restricting the claimed subject matter.

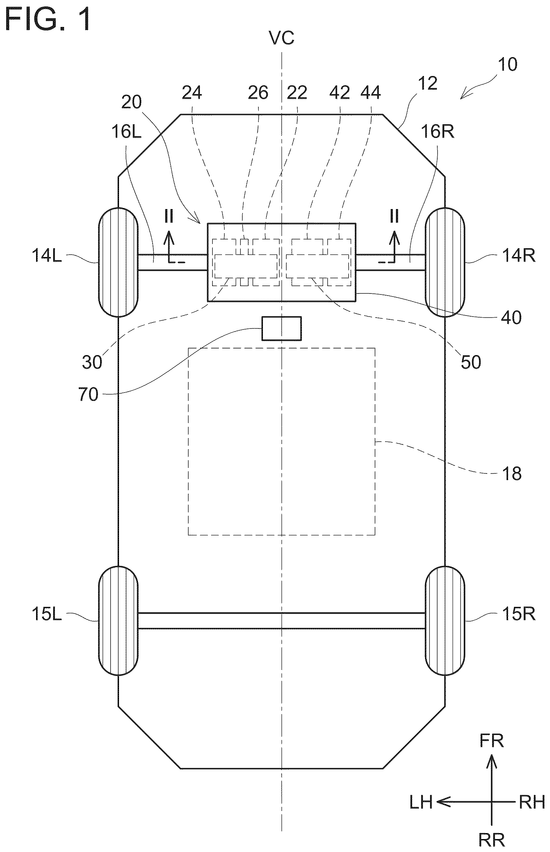

With reference to drawings, a drive unit 20 for a vehicle according to an embodiment will be described. As shown in FIG. 1, the drive unit 20 of the present embodiment can be mounted in a vehicle 10. The vehicle 10 is an electric-powered vehicle configured to be driven by a motor. Here, directions of the drive unit 20 in the drawings correspond to directions of the vehicle 10 when the drive unit 20 is mounted in the vehicle 10, i.e., correspond to directions of the vehicle 10. A direction FR indicates frontward in a front-rear direction of the vehicle 10, while a negative direction RR relative to the direction FR indicates rearward in the front-rear direction of the vehicle 10. A direction LH indicates leftward in a left-right direction of the vehicle 10 (also called "vehicle width direction"), while a negative direction RF relative to the direction LH indicates rightward in the vehicle left-right direction. A direction UP indicates upward in an up-down direction of the vehicle 10 (also called "vehicle height direction"), while a negative direction DW relative to the direction UP indicates downward in the up-down direction of the vehicle 10.

The drive unit 20 is mounted in the vehicle 10 as if the drive unit 20 is divided by a vehicle central plane VC located between and equidistant from a left wheel 14L and a right wheel 14R. The drive unit 20 has a first drive shaft 16L as a left drive shaft connected thereto. The first drive shaft 16L is connected to the left wheel 14L disposed in a front portion of a vehicle body 12 of the vehicle 10. The drive unit 20 has a second drive shaft 16R as a right drive shaft connected thereto. The second drive shaft 16R is connected to the right wheel 14R disposed in the front portion of the vehicle body 12 of the vehicle 10. As described later, the drive unit 20 is configured to drive the pair of left and right wheels 14L, 14R independently from each other. In a modification, the drive unit 20 may drive a pair of left and right wheels 15L, 15R disposed in a rear portion of the vehicle body 12. The drive unit 20 is provided by a battery 18 disposed, for example, under the floor of the vehicle 10 with electric power for driving the pair of left and right wheels 14L, 14R.

The drive unit 20 comprises a first motor 22, a first reduction drive 24, a lock mechanism 26, a first inverter 30, a second motor 42, a second reduction drive 44, a second inverter 50, and a casing 60. In the casing 60, the first motor 22, the first reduction drive 24, the first inverter 30, the lock mechanism 26, the second motor 42, the second reduction drive 44, and the second inverter 50 are housed.

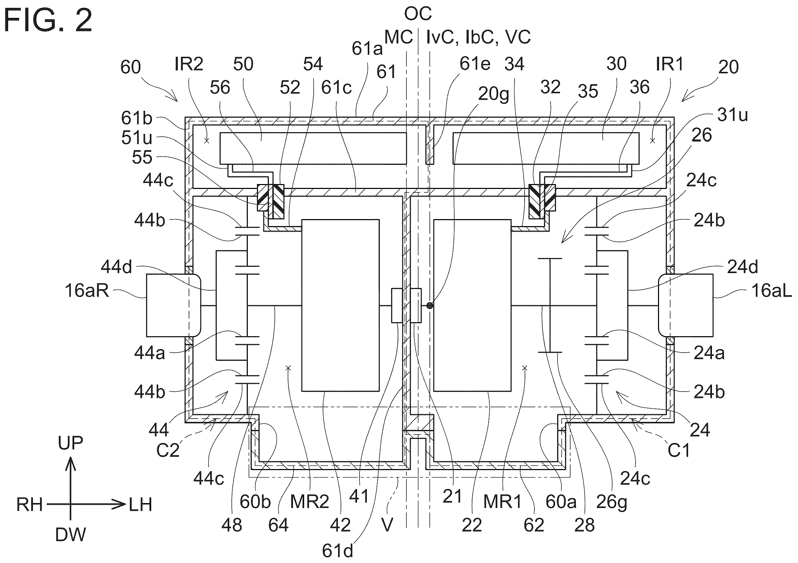

As illustrated in FIG. 2, the casing 60 is sectioned into a first portion C1 and a second portion C2, in which the first portion C1 is located closer to the left wheel 14L of the vehicle 10 and the second portion C2 is located closer to the right wheel 14R of the vehicle 10 when the casing 60 is mounted in the vehicle 10. In the first portion C1, the first motor 22, the first reduction drive 24, the first inverter 30, and the lock mechanism 26 are disposed. In the second portion C2, the second motor 42, the second reduction drive 44, and the second inverter 50 are disposed.

The first motor 22 is connected through the first reduction drive 24 to a first drive shaft inboard portion 16aL of the first drive shaft 16L. The second motor 42 is connected through the second reduction drive 44 to a second drive shaft inboard portion 16aR of the second drive shaft 16R.

The first motor 22 is an electric motor, and is a prime mover configured to drive the left wheel 14L. A rotary axis 28 (i.e., motor shaft) of the first motor 22 is rotatably supported by the casing 60 via a bearing 21. The second motor 42 is an electric motor, and is a prime mover configured to drive the right wheel 14R. The second motor 42 has the same configuration as that of the first motor 22 (or symmetrical configuration). A rotary axis 48 (i.e., motor shaft) of the second motor 42 is rotatably supported by the casing 60 via a bearing 41. The first motor 22 and the second motor 42 are disposed coaxially with each other. That is, the rotary axis 28 of the first motor 22 and the rotary axis 48 of the second motor 42 are disposed on the same line.

As illustrated in FIG. 2, the first reduction drive 24 is connected to the rotary axis 28 of the first motor 22. The first reduction drive 24 reduces rotation of the first motor 22. The first reduction drive 24 has a planetary gear mechanism disposed coaxially with the first motor 22. Specifically, the first reduction drive 24 comprises a sun gear 24a, a plurality of planetary gears 24b, an inner gear 24c, and a planetary carrier 24d. The sun gear 24a is connected to the rotary axis 28 of the first motor 22. The inner gear 24c is secured on the casing 60. The plurality of planetary gears 24b is disposed between the sun gear 24a and the inner gear 24c, and configured to mesh with both the sun gear 24a and the inner gear 24c. The planetary carrier 24d rotatably supports each of the plurality of planetary gears 24b, and is rotatably supported by the casing 60. Due to this, the planetary carrier 24d holds the plurality of planetary gears 24b such that the plurality of planetary gears 24b can each rotate about its axis and revolve along its orbit. The planetary carrier 24d has the first drive shaft inboard portion 16aL connected thereto. Such planetary gear mechanism allows the first reduction drive 24 to increase torque outputted to the left wheel 14L relative to torque inputted from the first motor 22.

The second reduction drive 44 is connected to the rotary axis 48 of the second motor 42. The second reduction drive 44 reduces rotation of the second motor 42. The second reduction drive 44 has a configuration symmetrical with that of the first reduction drive 24. That is, the second reduction drive 44 has a planetary gear mechanism disposed coaxially with the second motor 42. Specifically, the second reduction drive 44 comprises a sun gear 44a, a plurality of planetary gears 44b, an inner gear 44c, and a planetary carrier 44d. The sun gear 44a is connected to the rotary axis 48 of the second motor 42. The inner gear 44c is secured on the casing 60. The plurality of planetary gears 44b is disposed between the sun gear 44a and the inner gear 44c, and configured to mesh with both the sun gear 44a and the inner gear 44c. The planetary carrier 44d supports rotatably each of the plurality of planetary gears 44b, and is supported rotatably by the casing 60. Due to this, the planetary carrier 44d holds the plurality of planetary gears 44b such that the plurality of planetary gears 44b each can rotate about its axis and revolve along its orbit. The planetary carrier 44d has the second drive shaft inboard portion 16aR connected thereto. Such planetary gear mechanism allows the second reduction drive 44 to increase torque outputted to the right wheel 14R relative to torque inputted from the second motor 42.

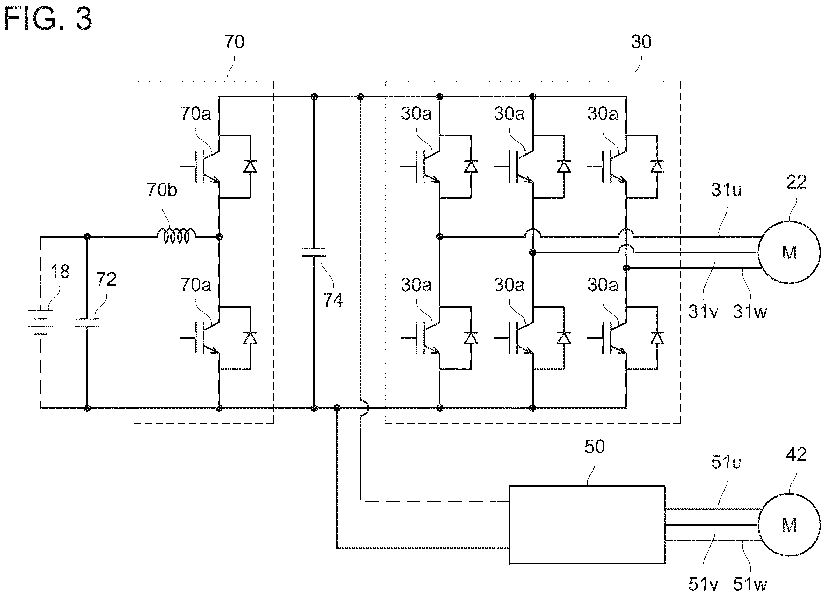

As illustrated in FIGS. 2 and 3, the first inverter 30 is a three-phase alternating current (U phase, V phase, W phase) inverter with a plurality of (six in the present embodiment) switching elements 30a. Each switching element 30a is for example an RC-IGBT device. The first inverter 30 is electrically connected to the first motor 22. The first inverter 30 has the battery 18 electrically connected thereto. Accordingly, the first inverter 30 is configured to convert direct current power supplied from the battery 18 to three-phase alternating current, and supply the same to the first motor 22. Although this is not illustrated, the first inverter 30 is secured to the first portion C1 of the casing 60.

The second inverter 50 is a three-phase alternating current inverter, which has the same configuration as the first inverter 30. The second inverter 50 is electrically connected to the second motor 42. The second inverter 50 has the battery 18 electrically connected thereto. Accordingly, the second inverter 50 is configured to convert direct current power supplied from the battery 18 to three-phase alternating current, and supply the same to the second motor 42. The second inverter 50 is disposed parallel to the first inverter 30. Although this is not illustrated, the second inverter 50 is secured to the second portion C2 of the casing 60.

Although this is not limiting, a DC-DC converter 70 is connected between the first inverter 30 and the battery 18, and also between the second inverter 50 and the battery18. The DC-DC converter 70 boosts the voltage of the direct current power supplied from the battery 18, and the direct current power with the boosted voltage to each of the first inverter 30 and the second inverter 50. The DC-DC converter 70 has a pair of switching elements 70a and a coil 70b. Each switching element 70a is an RC-IGBT, which is the same as the switching elements 30a of the first inverter 30. One of the pair of switching elements 70a has one end connected through the coil 70b to the positive electrode of the battery 18, and the other end connected to each of the first inverter and the second inverter. The other of the pair of switching elements 70a has one end connected between the battery 18 and the first and second inverters, and the other end connected through the coil 70b to the negative electrode of the battery 18. Although this is an example, a capacitor 72 is disposed between the battery 18 and the DC-DC converter 70, and a capacitor 74 is disposed between the DC-DC converter 70 and the first and second inverters 30 and 50.

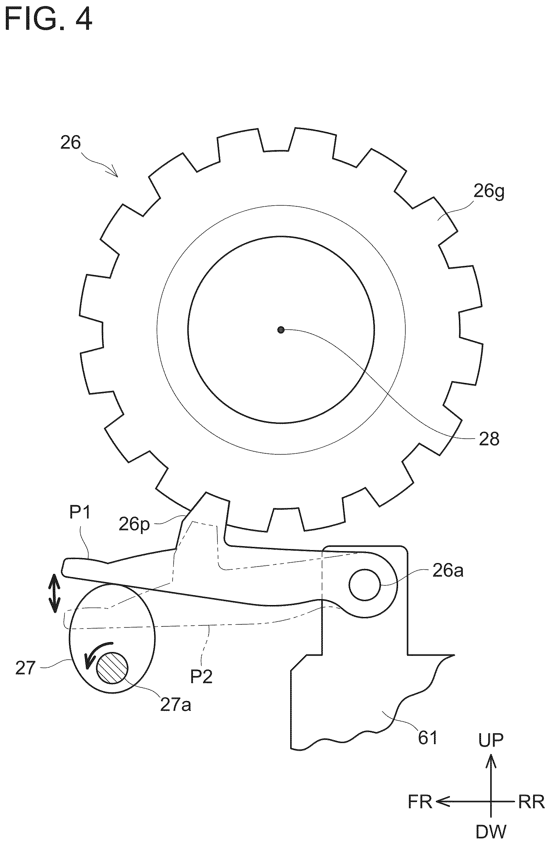

As illustrated in FIGS. 2 and 4, the lock mechanism 26 mechanically locks and unlocks the first reduction drive 24. The lock mechanism 26 is a mechanical lock used for parking the vehicle, and is also called a parking lock. The lock mechanism 26 comprises a lock gear 26g and a lock pole 26p. The lock gear 26g is secured to, for example, the rotary axis 28 of the first motor 22. The lock pole 26p is configured to move between a lock position P1 where the lock pole 26p is engaged with the lock gear 26g and an unlock position P2 where the lock pole 26p is disengaged from the lock gear 26g. The lock pole 26p is rotatably supported by a casing body 61 of the casing 60 via a rotary axis 26a. Although this is not limiting, the lock pole 26p is configured to be moved by an actuator comprising a cam 27 and an electric motor (not shown). The cam 27 is a plate member in an oval shape or an elliptic shape. The lock pole 26p is switched between the lock position P1 and the unlock position P2, by the cam 27 being caused by the electric motor to rotate about a rotary axis 27a. When the cam 27 moves from a position shown in FIG. 4 in an arrow direction, for example, the lock pole 26p moves from the lock position P1 to the lower, unlock position P2. Although this is not limiting, the lock mechanism 26 is disposed on the rotary axis 28 connecting between the first motor 22 and the first reduction drive 24. According to such configuration, when the first reduction drive 24 is locked, torque acting on the lock mechanism 26 can be made relatively smaller. The position of the lock mechanism 26 is however not limited to this, and the lock mechanism 26 may be positioned closer to the left wheel 14L (i.e., output axis of the first reduction drive 24) than to the first reduction drive 24.

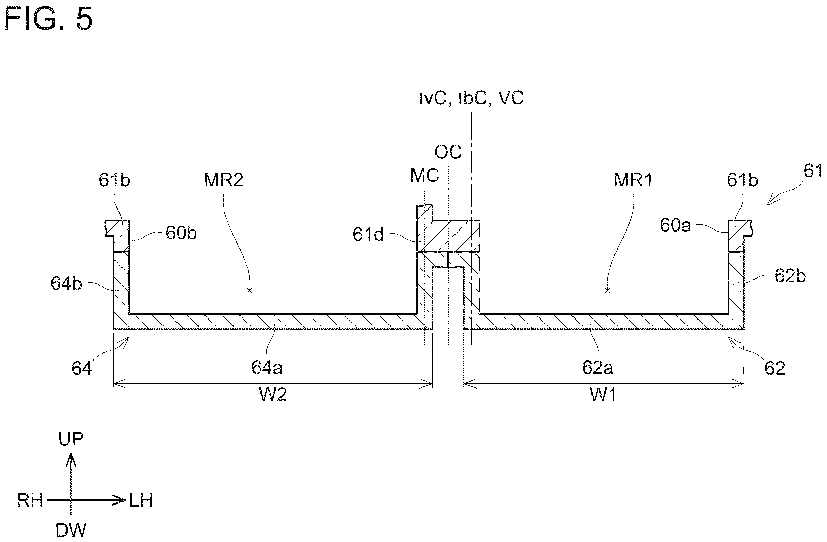

With reference to FIGS. 2 and 5, details of the casing 60 will be described. As illustrated in FIG. 2, the casing 60 has a first motor chamber MR1, a second motor chamber MR2, a first inverter chamber IR1, and a second inverter chamber IR2. The first motor chamber MR1 is located in the first portion C1 of the casing 60, and houses the first motor 22 and the first reduction drive 24. Here, as mentioned above, since the lock mechanism 26 is disposed on the rotary axis 28 between the first motor 22 and the first reduction drive 24, the lock mechanism 26 is also housed in the first motor chamber MR1. The second motor chamber MR2 is located in the second portion C2 and houses the second motor 42 and the second reduction drive 44. The first inverter chamber IR1 is located in the first portion C1, and houses the first inverter 30. The second inverter chamber IR2 is located in the second portion C2, and houses the second inverter 50. In a modification, however, the DC-DC converter 70 may be housed in at least one of the first inverter chamber IR1 and the second inverter chamber IR2.

The casing 60 is a casing member. The casing 60 is constituted of a metal. The casing 60 comprises the casing body 61 open downward and two oil pans 62, 64 covering the casing body 61 from below. The casing body 61 comprises an upper wall 61a, a peripheral wall 61b, a first bulkhead 61c, a second bulkhead 61d, and a third bulkhead 61e. The peripheral wall 61b extends downward from the peripheral edge of the upper wall 61a.

The first bulkhead 61c spans inside the peripheral wall 61b along a plane direction perpendicular to the up-down direction (i.e., along the left-right direction and front-rear direction), and separates the motor chambers MR1, MR2 and the inverter chambers IR1, IR2 from each other.

The second bulkhead 61d is located on a motor central plane MC located between and equidistant from the first motor 22 and the second motor 42. The first motor 22 is supported onto the left side of the second bulkhead 61d. The second motor 42 is supported onto the right side of the second bulkhead 61d. The second bulkhead 61d extends to at least one of the oil pans 62, 64. The second bulkhead 61d completely separates the first motor chamber MR1 and the second motor chamber MR2 from each other. According to such configuration, movement of lubricant between the first motor chamber MR1 and the second motor chamber MR2 can be suppressed, and accordingly it is also possible to suppress mass imbalance in the drive unit 20 between the left and right sides caused by the lubricant moving between the first motor chamber MR1 and the second motor chamber MR2. In a modification, the second bulkhead 61d may separate partially the first motor chamber MR1 and the second motor chamber MR2 from each other. In another modification, the casing body 61 may not comprise the second bulkhead 61d. In this case, each of the first motor 22 and the second motor 42 may be rotatably supported onto another portion of the casing body 61.

The third bulkhead 61e is located on an inverter central plane IvC located between and equidistant from the first inverter 30 and the second inverter 50. The third bulkhead 61e partially separates the first inverter chamber IR1 and the second inverter chamber IR2 from each other. In a modification, the third bulkhead 61e may completely separate the first inverter chamber IR1 and the second inverter chamber IR2 from each other. In another modification, the casing body 61 may not comprise the third bulkhead 61e.

In the present embodiment, the inverter central plane IvC coincides with the vehicle central plane VC. In a modification, the inverter central plane IvC may not coincide with the vehicle central plane VC.

The second bulkhead 61d and the third bulkhead 61e are an example for "motor chamber bulkhead" and "inverter chamber bulkhead" in the art disclosed herein, respectively.

As illustrated in FIG. 5, two oil pans 62, 64 are disposed in the lower part of the casing 60. The casing 60 comprises two openings 60a, 60b defined by the peripheral wall 61b and the second bulkhead 61d. The two openings 60a, 60b comprise a first opening 60a closer to the first portion C1, and a second opening 60b closer to the second portion C2. The two oil pans 62, 64 comprise a first oil pan 62 closing the first opening 60a and a second oil pan 64 closing the second opening 60b. Each of the two oil pans 62, 64 is fastened to the casing body 61 with, for example, a plurality of bolts (not shown).

Each of the oil pans 62, 64 is configured to store the respective lubricant of the first motor chamber MR1 and the second motor chamber MR2. The first oil pan 62 comprises a bottom wall 62a and a peripheral wall 62b extending upward from the peripheral edge of the bottom wall 62a. The second oil pan 64 comprises a bottom wall 64a and a peripheral wall 64b extending upward from the peripheral edge of the bottom wall 64a. A capacity of the second oil pan 64 is greater than that of the first oil pan 62. Specifically, a dimension W2 in the left-right direction (i.e., width dimension) of the second oil pan 64 is greater than a dimension W1 in the left-right direction (i.e., width dimension) of the first oil pan 62. A dimension of the front-rear direction of the first oil pan 62 is substantially equal to a dimension in the front-rear direction of the second oil pan 64. In a modification, the capacity of the first oil pan 62 and the capacity of the second oil pan 64 may be the same as each other, and the left-right directional dimensions W1 and W2 of the first oil pan 62 and the second oil pan 64 may be the same as each other.

As illustrated in FIG. 2, in the present embodiment, the motor central plane MC is offset closer to the second portion C2 of the casing 60 relative to the inverter central plane IvC such that a center of gravity 20g of the drive unit 20 is located on an inboard central plane IbC located between and equidistant from the first drive shaft inboard portion 16aL and the second drive shaft inboard portion 16aR.

In the present embodiment, the inboard central plane IbC coincides with the vehicle central plane VC. In a modification, the inboard central plane IbC may not coincide with the vehicle central plane VC.

Further, in the present embodiment, an oil pan central plane OC located between and equidistant from the first oil pan 62 and the second oil pan 64 is offset closer to the first portion C1 of the casing 60 relative to the motor central plane MC such that the center of gravity 20g of the drive unit 20 is located on the inboard central plane IbC.

In the drive unit 20 according to the present embodiment, the first motor 22, the first reduction drive 24, the first inverter 30, and the lock mechanism 26 are disposed in the first portion C1 of the casing 60 (i.e., portion closer to the left wheel 14L), while the second motor 42, the second reduction drive 44, and the second inverter 50 are disposed in the second portion C2 of the casing 60 (i.e., portion closer to the right wheel 14R). That is, the lock mechanism 26 only exists in the first portion C1 of the casing 60, and there is no configuration corresponding to the lock mechanism 26 in the second portion C2 of the casing 60. For that reason, in the above-described drive unit 20, the first motor 22 and the second motor 42 are disposed such that the position of the center of gravity in the first and second motors 22 and 42 as a whole is offset closer to the second portion C2 relative to the inverter central plane IvC. Specifically, the motor central plane MC is offset closer to the second portion C2 of the casing 60 relative to the inverter central plane IvC. Due to this, even when the lock mechanism 26 exists in the drive unit 20, mass imbalance of the drive unit 20 between the left and right sides can be suppressed.

Further, in the present embodiment, the first motor 22 and the second motor 42 are disposed symmetrically with respect to the motor central plane MC. According to such configuration, mass imbalance of the drive unit 20 between the left and right sides can be suppressed. In a modification, however, the first motor 22 and the second motor 42 may not be disposed symmetrically with respect to the motor central plane MC.

Further, in the present embodiment, the oil pan central plane OC is offset closer to the first portion C1 of the casing 60 relative to the motor central plane MC. According to such configuration, the first oil pan 62 and the second oil pan 64 can be disposed such that the position of the center of gravity in the first and second oil pans 62 and 64 as a whole is offset closer to the first portion C1 relative to the motor central plane MC. Due to this, the mass imbalance in the drive unit 20 between the left and right sides can be suppressed.

Further, in the present embodiment, the first inverter 30 and the second inverter 50 are arranged substantially symmetrically with respect to the inverter central plane IvC. According to such configuration, the mass imbalance in the drive unit 20 between the left and right sides can be effectively suppressed. In a modification however, the first inverter 30 and the second inverter 50 may not be arranged symmetrically with respect to the inverter central plane IvC.

Further, in the present embodiment, the center of gravity 20g of the drive unit 20 is located on the inboard central plane IbC. According to such configuration, when the drive unit 20 is mounted in the vehicle 10 such that the center of gravity 20g of the drive unit 20 is located on the vehicle central plane VC, ones with an equal length can be used for the first drive shaft 16L and the second drive shaft 16R. This can improve the driving performance of the vehicle 10.

As illustrated in FIGS. 2 and 3, the drive unit 20 comprises a plurality of first conductive paths 31u, 31v, 31w, a first terminal block 32, a plurality of second conductive paths 51u, 51v, 51w, and a second terminal block 52. The plurality of first conductive paths 31u, 31v, 31w electrically connects the first motor 22 and the first inverter 30 with each other. The plurality of first conductive paths 31u, 31v, 31w includes a U-phase conductive path 31u, a V-phase conductive path 31v, and a W-phase conductive path 31w. The U-phase conductive path 31u, the V-phase conductive path 31v, and the W-phase conductive path 31w have alternating current with different phases from each other flowing therethrough. Each of the plurality of first conductive paths 31u, 31v, 31w is constituted of, for example, a metal. The U-phase conductive path 31u passes through the first terminal block 32 and extends thereon. The first terminal block 32 is secured on the first bulkhead 61c of the casing 60. Accordingly, the intermediate part of the U-phase conductive path 31u is secured to the casing 60 with the first terminal block 32. The first terminal block 32 is constituted of, for example, resin. The U-phase conductive path 31u comprises a first section 34, a second section 36, and a relay section 35 which relays between the first section 34 and the second section 36. The first section 34 extends from the first motor 22 to the first terminal block 32. The second section 36 extends from the first terminal block 32 to the first inverter 30. The relay section 35 is disposed in the first terminal block 32. The respective sections 34, 35, 36 are constituted of different members from each other. Although this is not illustrated in FIG. 2, the V-phase conductive path 31v and the W-phase conductive path 31w have the same configuration as the U-phase conductive path 31u.

A plurality of second conductive paths 51u, 51v, 51w electrically connects the second motor 42 and the second inverter 50 with each other. The plurality of second conductive paths 51u, 51v, 51w has the same configuration as the plurality of first conductive paths 31u, 31v, 31w and comprises a U-phase conductive path 51u, a V-phase conductive path 51v, and a W-phase conductive path 51w. The U-phase conductive path 51u passes through the second terminal block 52 and extends thereon. The second terminal block 52 is secured to the first bulkhead 61c of the casing 60. Accordingly, the intermediate part of the U-phase conductive path 51u is secured to the casing 60 with the second terminal block 52. The second terminal block 52 is constituted of, for example, a resin. The U-phase conductive path 51u comprises a first section 54, a second section 56, and a relay section 55 relaying between the first section 54 and the second section 56. The first section 54 extends from the second motor 42 to the second terminal block 52. The second section 56 extends from the second terminal block 52 to the second inverter 50. The relay section 55 is disposed in the second terminal block 52. The respective sections 54, 55, 56 are constituted of different members from each other. Here, although this is not illustrated in FIG. 2, the V-phase conductive path 51v and the W-phase conductive path 51w have the same configuration as the U-phase conductive path 51u.

The total length of each of the plurality of first conductive paths 31u, 31v, 31w differs from the total length of each of the plurality of second conductive paths 51u, 51v, 51w. Contrary to this, the length of the first section 34 of each of the plurality of first conductive paths 31u, 31v, 31w is equal to the length of the first section 54 of each of the plurality of second conductive paths 51u, 51v, 51w. According to such configuration, the first sections 34 of the plurality of first conductive paths 31u, 31v, 31w and the first sections 54 of the plurality of second conductive paths 51u, 51v, 51w can be standardized in designs. These first sections 34, 54 are each near the first motor 22 or the second motor 42, and thus they need to be relatively rigid and/or durable. If the designs of such first sections 34, 54 can be standardized, even when the total length of each of the plurality of first conductive paths 31u, 31v, 31w differs from the total length of each of the plurality of second conductive paths 51u, 51v, 51w, it is easy to satisfy the rigidity and/or durability required for the plurality of first conductive paths 31u, 31v, 31w and the plurality of second conductive paths 51u, 51v, 51w.

In the present embodiment, the lock mechanism 26 is disposed in the first portion C1 of the casing 60. However, the position of the lock mechanism 26 is not limited to this. The lock mechanism may be disposed in the second portion C2, instead of the first portion C1, and the lock mechanism may mechanically lock and unlock the second reduction drive 44. In this case, the motor central plane MC may be offset closer to the first portion C1 of the casing 60 relative to the inverter central plane IvC.

## Claims

1. A drive unit (20) for a vehicle (10) and configured to drive a pair of left and right wheels (14L, 14R) independently from each other, the drive unit (20) comprising:
a first motor (22) configured to drive one of the left and right wheels (14L, 14R);
a first reduction drive (24) configured to reduce rotation of the first motor;
a first inverter (30) electrically connected to the first motor (22);
a second motor (42) configured to drive another of the left and right wheels (14L, 14R);
a second reduction drive (44) configured to reduce rotation of the second motor (42);
a second inverter (50) electrically connected to the second motor;
a lock mechanism (26) configured to mechanically lock and unlock the first reduction drive (24); and
a casing (60) housing the first motor (22), the first reduction drive (24), the first inverter (30), the second motor (42), the second reduction drive (44), the second inverter (50), and the lock mechanism (26),
wherein the casing (60) comprises a first portion (C1) and a second portion(C2), wherein the first portion (C1) is disposed on one side of the pair of left and right wheels (14L, 14R) and the second portion (C2) is disposed on another side of the pair of left and right wheels (14L, 14R) when the drive unit (20) is mounted in the vehicle (10),
the first motor (22), the first reduction drive (24), the first inverter (30), and the lock mechanism (26) are disposed in the first portion (C1) of the casing (60),
the second motor (42), the second reduction drive (44), and the second inverter(50) are disposed in the second portion (C2) of the casing (60), and
a motor central plane (MC) located between and equidistant from the first motor (22) and the second motor (42) is offset closer to the second portion (C2) of the casing (60) relative to an inverter central plane (IvC) located between and equidistant from the first inverter (30) and the second inverter (50).

2. The drive unit (20) according to claim 1, wherein
the casing (60) comprises a first oil pan (62) provided at a lower part of the first portion (C1) and a second oil pan (64) provided at a lower part of the second portion (C2), and
an oil pan central plane (OC) located between and equidistant from the first oil pan (62) and the second oil pan (64) is offset closer to the first portion (C1) of the casing (60) relative to the motor central plane (MC).

3. The drive unit (20) according to claim 1 or 2, wherein
the drive unit (20) is connected to a first drive shaft (16L) connected to the one of the left and right wheels (14L, 14R) and a second drive shaft (16R) connected to the other of the left and right wheels (14L, 14R), and
wherein a center of gravity (20g) of the drive unit (20) is located on an inboard central plane (IbC) located between and equidistant from a first drive shaft inboard portion (16aL) of the first drive shaft (16L) and a second drive shaft inboard portion (16aR) of the second drive shaft (16R).

4. The drive unit (20) according to any one of claims 1 to 3, further comprising:
a first terminal block (32) secured to the casing (60);
a first conductive path (31u, 31v, 31w) electrically connecting the first inverter (30) and the first motor (22) via the first terminal block (32);
a second terminal block (52) secured to the casing (60); and
a second conductive path (51u, 51v, 51w) electrically connecting the second inverter (50) and the second motor (42) via the second terminal block (52),
wherein a total length of the first conductive path (31u, 31v, 31w) and a total length of the second conductive path (51u, 51v, 51w) are different from each other, and
a section length of the first conductive path (31u, 31v, 31w) from the first motor (22) to the first terminal block (32) and a section length of the second conductive path (51u, 51v, 51w) from the second motor (42) to the second terminal block (52) are equal to each other.

5. The drive unit (20) according to any one of claims 1 to 4, wherein the first motor (22) and the second motor (42) are arranged symmetrically with respect to the motor central plane (MC).

6. The drive unit (20) according to any one of claims 1 to 5, wherein the first inverter (30) and the second inverter (50) are arranged symmetrically with respect to the inverter central plane (IvC).

7. The drive unit (20) according to any one of claims 1 to 6, wherein
the casing (60) comprises:
a first motor chamber (MR1) being located in the first portion (C1) and housing the first motor (22) and the first reduction drive (24);
a second motor chamber (MR2) being located in the second portion (C2) and housing the second motor (42) and the second reduction drive (44); and
a motor chamber bulkhead (61d) being located on the motor central plane (MC) and at least partially separating the first motor chamber (MR1) and the second motor chamber (MR2) from each other.

8. The drive unit according to claim 7, wherein
the casing (60) further comprises:
a first inverter chamber (IR1) being located in the first portion (C1) and housing the first inverter (30),
a second inverter chamber(IR2) being located in the second portion (C2) and housing the second inverter (50), and
an inverter chamber bulkhead (61e) being located on the inverter central plane (IvC) and at least partially separating the first inverter chamber (IR1) and the second inverter chamber (IR2) from each other.

9. The drive unit (20) according to any one of claims 1 to 8, wherein the lock mechanism (26) is provided on a rotary axis (28) connecting the first motor (22) and the first reduction drive (24).

10. The drive unit (20) according to claim 9, wherein
the lock mechanism (26) comprises:
a lock gear (26g) secured to the rotary axis (28); and
a lock pole (26p) configured to move between a lock position (P1) in which the lock pole (26p) is engaged with the lock gear (26g) and an unlock position (P2) in which the lock pole (26p) is disengaged from the lock gear (26g).
